# EUROPÄISCHE PATENTSCHRIFT

(11) **EP 2 698 964 B1**
(45) Veröffentlichungstag und Bekanntmachung des Hinweises auf die Patenterteilung: **26.09.2018**
(21) Anmeldenummer: 13003728.6
(22) Anmeldetag: 25.07.2013
(51) Int. Cl.: H04L 29/06, H04W 8/18, H04M 15/00, H04M 17/00, H04W 4/00

(54) **Betreiben eines Teilnehmeridentitätsmoduls**
Operating a subscriber identification module
Opèration d'un module d'identification d'abonné

(30) Priorität: 14.08.2012 DE 102012016166
(43) Veröffentlichungstag der Anmeldung: 19.02.2014
(73) Patentinhaber: Giesecke+Devrient Mobile Security GmbH, 81677 München (DE)
(72) Erfinder: Nitsch, Nils, 85570 Markt Schwaben (DE)

(56) Entgegenhaltungen:
- WO-A1-02/51182
- WO-A1-2011/161490
- WO-A1-2012/017059

## Beschreibung

Die Erfindung betrifft Verfahren zum Betreiben eines zumindest erste und ein zweite Teilnehmeridentitätsdaten aufweisendes Teilnehmeridentitätsmoduls, zwischen denen benutzerseitig, netzwerkseitig, endgeräteseitig und/oder automatisiert umgeschaltet werden kann.

Teilnehmeridentitätsdaten dienen dazu, einen Teilnehmer in einem Kommunikationsnetzwerk, beispielsweise einem digitalen Mobilfunknetzwerk, eindeutig zu identifizieren und/oder zu authentisieren. Durch diese Teilnehmeridentitätsdaten ist es einem Betreiber eines Kommunikationsnetzwerks möglich, die Nutzung eines vom Netzbetreiber angebotenen Dienstes, beispielsweise eines Sprach- und/oder Datendienstes, jedem Teilnehmer in dem Kommunikationsnetzwerk eindeutig zuzuordnen. Weiterhin ist es dem Betreiber möglich, einen Netzzugang, also die Einbuchung in das Kommunikationsnetz, zu ermöglichen, sobald eine Authentisierung des Teilnehmers stattgefunden hat oder den Netzugang zu verweigern, falls eine Authentisierung des Teilnehmers nicht möglich ist.

Diese Teilnehmeridentitätsdaten befinden sich in einem Teilnehmeridentitätsmodul, auch als Subscriber Identity Modul (SIM) bezeichnet. Üblicherweise wird jedes Endgerät mit einem derartigen Teilnehmeridentitätsmodul ausgestattet, um Dienste des Kommunikationsnetzwerkes nutzen zu können.

Meldet sich ein Teilnehmer an einem Kommunikationsnetz an, so wird mittels der Teilnehmeridentitätsdaten festgestellt, ob der Teilnehmer ordnungsgemäß im Kommunikationsnetz aktiviert ist und welche Dienste der Teilnehmer in dem Netzwerk nutzen darf. Ein nicht eindeutig identifizierbarer bzw. authentifizierbarer Teilnehmer ist zur Nutzung der Dienste nicht berechtigt und wird vom Netzwerk abgewiesen.

Es ist bekannt, in ein Teilnehmeridentitätsmodul zumindest erste und ein zweite Teilnehmeridentitätsdaten einzubringen, zwischen denen umgeschaltet werden kann. Derartige Teilnehmeridentitätsmodule werden auch als Dual-IMSI, Multi-IMSI und/oder Auto-Roamer SIM bezeichnet.

Die Internationale Anmeldung WO 2011/161490 offenbart ein automatisches Umschalten von einer Home IMSI zu einer Roaming IMSI. Ein Problem bei der Verwendung derartiger Teilnehmeridentitätsmodule besteht darin, dass eine hohe Anzahl von Umschaltungen von den ersten Teilnehmeridentitätsdaten auf die zweiten Teilnehmeridentitätsdaten erfolglos ist. Dies liegt häufig daran, dass bei dem Empfangen eines Umschaltkommandos die zweiten Teilnehmeridentitätsdaten ohne Beachten der tatsächlichen Netzwerksituation endgeräteseitig aktiviert werden, wodurch bei zirka 30 Prozent der Umschaltungen im Teilnehmeridentitätsmodul nur Teile der ersten Teilnehmeridentitätsdaten durch Teile der zweiten Teilnehmeridentitätsdaten ersetzt werden. Die Situation verschärft sich, wenn das Endgerät und/oder das Teilnehmeridentitätsmodul während des Umschaltens deaktiviert werden. Darüber hinaus führt auch ein nicht Normkonformes Verhalten der Endgeräte zu einem erfolglosen Umschalten. Ebenso kann eine fehlende Netzabdeckung oder eine temporäre Netzüberlastung zum Zeitpunkt der Umschaltung ein Grund für ein erfolgloses Umschalten zwischen den Teilnehmeridentitätsdaten sein.

In der Folge weist das Teilnehmeridentitätsmodul Teilnehmeridentitätsdaten auf, die weder in einem ersten noch in einem zweiten Kommunikationsnetzwerk zu einer erfolgreichen Authentisierung und/oder Identifizierung des Teilnehmers führen. Der Teilnehmer wird in beiden Kommunikationsnetzen abgewiesen. Das Teilnehmeridentitätsmodul befindet sich dann in einem undefinierten Zustand. Ein Rücksetzen ist weder netzseitig noch benutzerseitig manuell über das Endgerät möglich. Hierdurch wird die Nutzung derartiger Teilnehmeridentitätsmodule für einen Nutzer unattraktiv.

Es ist Aufgabe der vorliegenden Erfindung, die Umschaltung zwischen zwei Teilnehmeridentitätsdaten eines Teilnehmeridentitätsmoduls abzusichern. Insbesondere soll das Teilnehmeridentitätsmodul jederzeit in einen definierten Zustand versetzt werden, in dem einen Teilnehmer an einem Kommunikationsnetzwerk authentisiert und/oder identifiziert.

Diese Aufgabe wird gelöst durch die in den nebengeordneten Patentansprüchen beschriebenen Merkmale. Vorteilhafte Ausgestaltungen ergeben sich aus den abhängigen Patentansprüchen.

Insbesondere wird die Aufgabe durch ein erfindungsgemäßes Verfahren zum Betreiben eines Teilnehmeridentitätsmoduls gelöst, wobei das Teilnehmeridentitätsmodul zumindest erste Teilnehmeridentitätsdaten und zweite Teilnehmeridentitätsdaten aufweist. Das Verfahren umfasst dabei die Verfahrensschritte: Empfangen eines Umschaltkommandos im Teilnehmeridentitätsmodul von einem, dem Teilnehmeridentitätsmodul zugeordneten Endgerät zum Umschalten von den ersten Teilnehmeridentitätsdaten auf die zweiten Teilnehmeridentitätsdaten; Überwachen des Teilnehmeridentitätsmoduls auf Aktualisierung zumindest einer spezifischen Datei im Teilnehmeridentitätsmodul, wobei die Aktualisierung durch ein dem Teilnehmeridentitätsmodul zugeordnetes Endgerät nach dem Empfangen des Umschaltkommandos erfolgt; und Umschalten von den ersten Teilnehmeridentitätsdaten auf die zweiten Teilnehmeridentitätsdaten sobald die Aktualisierung der spezifischen Datei erkannt wurde.

Bei einem Endgerät im Sinn der Erfindung handelt es sich prinzipiell um ein Gerät oder eine Gerätekomponente, welches Mittel zur Kommunikation mit dem Kommunikationsnetzwerk aufweist, um Dienste des Kommunikationsnetzes nutzen zu können. Beispielsweise ist ein mobiles Endgerät wie ein Smart Phone, ein Tablet-PC, ein Notebook, ein PDA unter dem Begriff zu fassen. Unter dem Endgerät können beispielsweise auch Multimediaendgeräte wie digitale Bilderrahmen, Audiogeräte, Fernsehgeräte, E-Book-Reader verstanden werden, die ebenfalls Mittel zur Kommunikation mit dem Kommunikationsnetzwerk aufweisen. Beispielsweise umfasst der Begriff Endgeräte auch jegliche Art von Maschinen, Automaten, Fahrzeuge, Einrichtungen welche Mittel, insbesondere Mobilfunkmodems, zur Kommunikation mit dem Kommunikationsnetzwerk aufweisen.

Bei einem Teilnehmeridentitätsmodul im Sinne der Erfindung handelt es sich um ein in Baugröße und Ressourcenumfang reduziertes Modul, welches einen Mikrocontroller und mindestens eine Datenschnittstelle zur Kommunikation mit einem Endgerät aufweist. Dieses Teilnehmeridentitätsmodul weist einen sicheren Speicherbereich auf, indem die Teilnehmeridentitätsdaten sicher eingebracht sind, um Manipulations- und/oder Missbrauchsversuche bei der Identifizierung und/oder Authentisierung am Netzwerk zu verhindern. Das Teilnehmeridentitätsmodul ist mittels des Endgeräts betriebsfähig.

Bei dem Teilnehmeridentitätsmodul handelt es sich beispielsweise um eine Chipkarte, auch Universal Integrated Circuit Card (UICC) oder SIM-Karte, in einem mobilen Funknetz mit, auf einem Chip gespeicherten maschinenlesbaren Teilnehmeridentifikationsdaten des Teilnehmers. Derartige Teilnehmeridentifikationsmodule werden mittels Kartenleseeinheiten in einem Endgerät betrieben und sind insbesondere dafür vorgesehen, aus dem Endgerät zum Zweck eines Austauschs oder der Verwendung in einem zweiten Endgerät entnommen werden zu können.

Alternativ handelt es sich bei dem Teilnehmeridentitätsmodul um einen integralen Bestandteil innerhalb des Endgeräts, beispielsweise eines fest verdrahteten elektronischen Bausteins. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im Endgerät ausgestaltet sein.

Alternativ handelt es sich bei dem Teilnehmeridentitätsmodul um ein Machine-to-Machine-, kurz M2M-, Modul. Diese Module dienen der Fernüberwachung, -kontrolle und -wartung von Endgeräten wie Maschinen, Anlagen und Systemen. Sie können alternativ auch für Zähleinheiten wie Stromzähler, Warmwasserzähler verwendet werden.

Alternativ ist das Teilnehmeridentitätsmodul als eine Softwarekomponente in einem vertrauenswürdigen Teil eines Betriebssystems, einer sogenannten Trusted Execution Environment (TEE) des Endgerätes ausgebildet. Das Teilnehmeridentitätsmodul ist dann beispielsweise innerhalb einer gesicherten Laufzeitumgebung in Form von darin ablaufenden Programmen, sogenannten Trustlets ausgebildet.

Teilnehmeridentitätsdaten im Sinn der Erfindung sind zum einen Daten, die einen Teilnehmer eindeutig im Kommunikationsnetz identifizieren, beispielsweise eine International Mobile Subscriber Identity (IMSI) und/oder teilnehmerspezifische Daten. Die IMSI ist das in einem Mobilfunkkommunikationsnetzwerk eindeutige Teilnehmeridentitätsdatum. Sie setzt sich zusammen aus dem Landescode MCC (Mobile Country Code), dem Netzwerkcode MNC (Mobile Network Code) und einer laufenden Nummer, die vom Netzbetreiber vergeben wird.

Darüber sind Teilnehmeridentitätsdaten Daten sein, die einen Teilnehmer eindeutig am Kommunikationsnetz authentisieren, beispielsweise ein Authentisierungsalgorithmus, spezifische Algorithmusparameter, ein kryptografischer Authentisierungsschlüssel und/oder ein kryptografischer Over-The-Air (OTA) Schlüssel.

Die Anzahl der Teilnehmeridentitätsdaten auf dem Teilnehmeridentitätsmodul ist nicht beschränkt. Es ist angedacht, in Zukunft auf einem Teilnehmeridentitätsmodul dreißig oder mehr Teilnehmeridentitätsdaten vorzusehen.

Ein Teilnehmer im Sinn der Erfindung ist beispielsweise eine Person, die mittels des Endgeräts auf Dienste des Kommunikationsnetzes zugreifen möchte. Als ein Teilnehmer ist auch ein Endgerät in einer M2M Umgebung zu verstehen.

Ein Kommunikationsnetzwerk im Sinn der Erfindung ist eine technische Einrichtung, auf der die Übertragung von Signalen unter Identifizierung und/oder Authentisierung des Kommunikationsteilnehmers stattfindet, wodurch Dienste angeboten werden. Das Kommunikationsnetz ist bevorzugt in Mobilfunkzellen aufgebaut, wobei die Größe einer Funkzelle abhängig von meteorologischen und geografischen Gegebenheiten sowie der verwendeten Funkantenne. Insbesondere wird in dieser Erfindung ein Mobilfunknetz beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation oder das "Long Term Evolution", kurz LTE, als Vertreter der vierten Generation als Mobilfunknetz verstanden.

Ein Dienst im Sinn der Erfindung ist insbesondere ein Sprachdienst oder ein Datendienst zu verstehen, mit dem Informationen und/oder Daten über das Kommunikationsnetzwerk übertragen werden.

Eine spezifische Datei ist erfindungsgemäß eine Gruppe von inhaltlich zusammengehörenden Daten, die insbesondere in einem nichtflüchtflüchtigen Speicherbereich des Teilnehmeridentitätsmoduls abgelegt ist. In der Datei werden Parameter und Daten bezüglich des aktuell verfügbaren Netzes abgelegt. In einer Ausgestaltung werden die eine Mobilfunknetzzelle charakterisierenden Daten in einer oder mehrerer spezifischen Dateien abgelegt anhand derer das Teilnehmeridentitätsmodul Informationen bezüglich des aktuellen Standorts des Endgeräts ermitteln kann.

Durch das erfindungsgemäße Verfahren und insbesondere dem Überwachen der zumindest einen spezifischen Datei des Teilnehmeridentitätsmoduls kann die Fehlerzahl bei Umschaltungen zwischen zwei Teilnehmeridentitätsdaten erheblich reduziert werden. Während bei nicht erfolgendem Überwachen bis zu 30 % der Subskriptionswechsel erfolglos sind, kann durch das erfindungsgemäße Vorgehen eine positive Einbuchrate von bis zu 95 % erzielt werden. Dabei weisen die vorgeschlagenen Verfahren eine Abwärtskompatibilität im Hinblick auf die in den Endgeräten verwendeten Software-Applikationen auf. Ebenso lassen sich die Verfahren geräteunabhängig einsetzen, da die Überwachung durch die Teilnehmeridentitätsmodule selbst erfolgt.

Das Empfangen des Umschaltkommandos erfolgt insbesondere durch ein, dem Teilnehmeridentitätsmodul zugeordnetes Endgerät. Das Endgerät leitet in diesem Fall das Umschaltkommando, welches vom Netzwerk initiiert wurde, vom Netzwerk an das Teilnehmeridentitätsmodul weiter. Bei derartigen Umschaltkommandos ist das Netzwerk die initiierende Instanz. Alternativ initiiert das Teilnehmeridentitätsmodul automatisch das Umschalten durch Überwachen von spezifischen Netzwerkparametern des Netzwerks.

In vorteilhafter Weise wird zumindest eine Datei überwacht, die vom Endgerät häufig aktualisiert wird, also das Dateiattribut "High Update Activity" aufweist. Derartige Dateien werden ggf. vom Endgerät unabhängig von den tatsächlich aktivierten Teilnehmeridentitätsdaten aktualisiert. Mit der Überwachung erkennt das Teilnehmeridentitätsmodul die für das Endgerät erkannte und mögliche Netzwerksituation. Bei der einen oder den mehreren Dateien handelt es sich vorzugsweise um Nutzdatendateien eines Datenbaums des Teilnehmeridentitätsmoduls. Insbesondere wird als Nutzdatendatei die Datei EF_LOCI überwacht. Ebenso ist es zweckmäßig, als Nutzdatendatei die Datei EF_FPLMN zu überwachen. Bei diesen beiden Dateien handelt es sich um Nutzdatendateien eines hierarchisch aufgebauten Dateisystems des Teilnehmeridentitätsmoduls mit einem Master File MF und zwei Directory Files DF direkt unter dem Master File MF. Sowohl unter dem MF als auch in den DFs befinden sich Nutzdatendateien mit den Daten für die Anwendung. Der Aufbau des Dateisystems kann beispielsweise dem Handbuch W. Rankl, W. Effing, "Handbuch der Chipkarten", 5. Auflage, Kapitel 12.3, Hanser Verlag entnommen werden. In der EF_LOCI sind Ortsinformationen (LOCI = Location Information) über den aktuellen Ort des Endgeräts gespeichert. In der Datei EF_FPLMN (FPLMN = Forbidden Public Land Mobile Network) ist eine Liste verbotener Netzbetreiber gespeichert.

Das Umschaltkommando wird benutzerseitig, netzwerkseitig und/oder automatisiert initiiert. wodurch sichergestellt ist, dass das Umschaltkommando außerhalb des Teilnehmeridentitätsmoduls initiiert wird.

In einer bevorzugten Ausgestaltung erfolgt anstelle oder zusätzlich zum Überwachung der mindestens einen spezifischen Datei ein Überwachen zumindest eines spezifischen Netzwerkparameters durch die Verarbeitung von teilnehmeridentitätsmodulseitig initiierten Netzstatusabfragen, wobei die Verarbeitung durch das dem Teilnehmeridentitätsmodul zugeordnete Endgerät erfolgt und die zweiten Teilnehmeridentitätsdaten aktiviert werden, sobald der spezifische Netzwerkparameter erkannt wurde.

Als Netzparameter können der Landescode (MCC) und/oder der Netzwerkcode (MNC) überwacht werden.

Im Rahmen der oben beschriebenen Verfahren wird zweckmäßigerweise überwacht, ob die spezifische oder spezifischen Dateien und/oder Netzwerkparameter überschrieben wurden, wobei ein Überschreiben die Verfügbarkeit eines neuen Mobilfunknetzwerks signalisiert.

Eine weitere Verbesserung des Erfolgs von Subskriptionswechseln ist durch eine Kombination der Überwachung der einen oder der mehreren spezifischen Dateien und des zumindest einen Netzparameters möglich. Das Überwachen endet bevorzugt mit Beenden einer konfigurierbaren Wartezeit.

Das Absichern der Umschaltung von den ersten Teilnehmeridentitätsdaten auf die zweiten Teilnehmeridentitätsdaten kann weiterhin dadurch unterstützt werden, dass durch das Teilnehmeridentitätsmodul eine aktive Abfrage des Netzstatus erfolgt, sobald eine konfigurierbare Warteschleife (Zeitdauer) beendet ist. Vorzugsweise erfolgt die Abfrage des Netzstatus in vorgegebenen Zeitintervallen. Die Warteschleifen können beispielsweise durch eine konfigurierbare Anzahl an Statuskommandos, welche von dem Endgerät an das Teilnehmeridentitätsmodul gesendet werden, erzeugt sein. Nach Ablauf der Warteschleife kann dann ein aktives Abfragen des Netzstatus erfolgen. Insbesondere erfolgt eine Abfrage des Netzstatus in vorgegebenen Zeitintervallen, wobei die Abfrage durch das Teilnehmeridentitätsmodul initiiert wird.

Bevorzugt wird auf die ersten Teilnehmeridentitätsdaten im Teilnehmeridentitätsmodul umgeschaltet, falls das Kommunikationsnetzwerk einen Zugang für das Teilnehmeridentitätsmodul nur mit eingeschränkten und/oder mit keinen Netzwerkdienstleistungen ermöglicht.

Das Abfragen des Netzstatus erfolgt dabei in bestimmten Intervallen, um beispielsweise eine Netzabdeckung sicherzustellen oder den Wechsel eines Mobilfunknetzwerks zeitnah erkennen zu können. Dies kann beispielsweise anhand der in der Datei EF_LOCI enthaltenen Parameter geschehen, welche zu den aktuellen Netzparametern passen müssen.

Bevorzugt wird auf die ersten Teilnehmeridentitätsdaten im Teilnehmeridentitätsmodul umgeschaltet falls ein Einbuchversuch in das Kommunikationsnetzwerk auf Basis der zweiten Teilnehmeridentitätsdaten nach Ablauf eines Zeitkriteriums erfolglos bleibt. Gemäß dieser Ausgestaltung wird auf die ersten Teilnehmeridentitätsdaten zurückgeschaltet, wenn das Einbuchen in ein Mobilfunknetzwerk mit den zweiten Teilnehmeridentitätsdaten fehlgeschlagen ist oder nach Ablauf eines Zeitkriteriums nicht erfolgt ist. Hierdurch erfolgt ein geordnetes Zurückschalten auf die ersten Teilnehmeridentitätsdaten bei fehlgeschlagenem Einbuchen in ein Mobilfunknetzwerk bzw. nach Ablauf eines bestimmten Zeitintervalls.

Die Erfindung schafft weiterhin ein Computerprogramm, das maschinenlesbare Programmbefehle für eine Steuerungseinheit einer Daten verarbeitenden Vorrichtung aufweist, die diese zur Ausführung eines Verfahrens gemäß dem oben beschriebenen Verfahren veranlassen. Das Computerprogrammprodukt kann ein körperliches Medium mit gespeicherten Programmbefehlen sein. Dies kann beispielsweise ein Halbleiterspeicher, eine Diskette oder eine CD-ROM sein. Das Computerprogrammprodukt kann auch ein nichtkörperliches Medium sein, beispielsweise ein über ein Computernetzwerk übermitteltes Signal.

Die Erfindung schafft weiterhin ein Teilnehmeridentitätsmodul, welches eingerichtet ist, das vorher beschriebene Verfahren auszuführen. Dabei weist das Teilnehmeridentitätsmodul zumindest erste Teilnehmeridentitätsdaten und zweite Teilnehmeridentitätsdaten auf. Das Umschaltkommando wird benutzerseitig, netzwerkseitig und/oder automatisiert initiiert.

In einer vorteilhaften Ausgestaltung sind die ersten Teilnehmeridentitätsdaten eingerichtet, einen Teilnehmer zur Nutzung von Netzwerkdiensten an einem ersten Kommunikationsnetzwerk zu authentisieren und die zweiten Teilnehmeridentitätsdaten eingerichtet, den Teilnehmer zur Nutzung von Netzwerkdiensten an einem zweiten Kommunikationsnetzwerk zu authentisieren. Durch ein derartiges Teilnehmeridentitätsmodul kann der Teilnehmer zwischen verschiedenen Kommunikationsnetzwerken wechseln, wobei die oben angegebenen Probleme durch das Überwachen der Dateien und das geordnete Zurückschalten überwunden werden.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein. Es zeigt:
Fig. 1 ein erfindungsgemäßes Teilnehmeridentitätsmodul mit ersten und zweiten Teilnehmeridentitäten zur Einbuchung in Kommunikationsnetze;
Fig. 2 ein Blockschaltbild zur Darstellung funktioneller Einheiten in einem Teilnehmeridentitätsmodul;
Fig. 3 eine Schichtendarstellung der Programm- und Datenhierarchie in einem erfindungsgemäßen Teilnehmeridentitätsmodul;
Fig. 4 eine beispielhafte Darstellung von erfindungsgemäße Teilnehmeridentitätsdaten;
Fig. 5 einen schematischen Ablaufplan einer erfindungsgemäß vorgesehenen Überwachung spezifischer Dateien und/oder von Netzparametern;
Fig. 6 einen schematischen Ablaufplan einer erfindungsgemäß vorgesehenen Umschaltung von ersten Teilnehmeridentitätsdaten auf zweite Teilnehmeridentitätsdaten;
Fig. 7 einen schematischen Ablaufplan einer erfindungsgemäß vorgesehenen Abfrage von spezifischen Dateien und Netzwerkparametern;
Fig. 8 einen schematischen Ablaufplan einer erfindungsgemäß vorgesehenen Abfrage des Netzwerkstatus;
Fig. 9 einen schematischen Ablaufplan einer erfindungsgemäß vorgesehenen Abfrage und Analyse von spezifischen Dateien
Fig. 10 einen schematischen Ablaufplan einer erfindungsgemäß vorgesehenen Abfrage und Analyse von Netzwerkparametern.

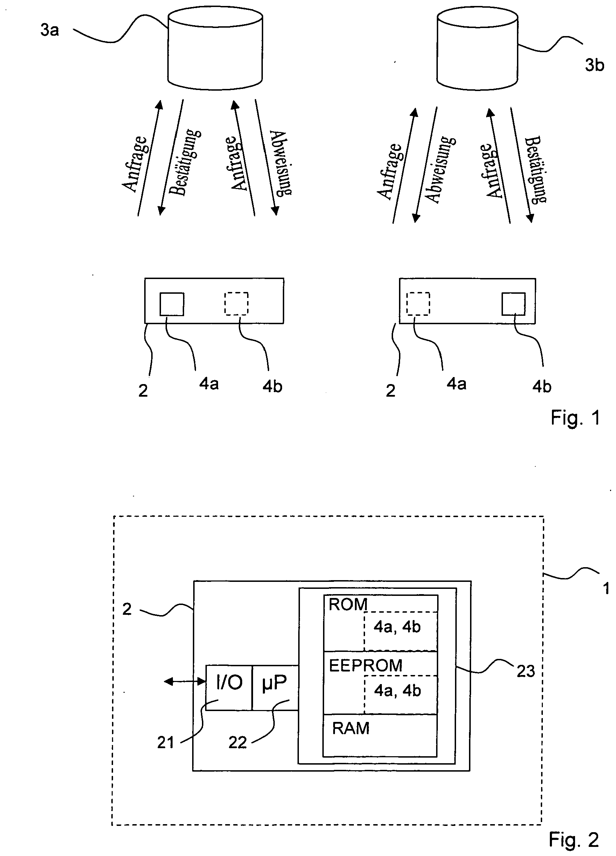

Figur 1 zeigt ein erfindungsgemäßes Teilnehmeridentitätsmodul 2 zur Identifizierung und Authentisierung eines Teilnehmers in einem Mobilfunknetz 3 als Kommunikationsnetzwerk. Das Teilnehmeridentitätsmodul 2 wird dabei mittels eines nicht dargestellten Endgeräts 1 betrieben. Das Teilnehmeridentitätsmodul 2 weist erste Teilnehmeridentitätsdaten 4a und zweite Teilnehmeridentitätsdaten 4b auf. Die Anzahl der Teilnehmeridentitätsdaten 4 in einem Teilnehmeridentitätsmodul ist dabei nicht beschränkt.

Möchte sich ein Teilnehmer mittels erster Teilnehmeridentitätsdaten 4a an dem Mobilnetz 3a anmelden, sodass beispielsweise ein nicht dargestelltes Endgerät 1 Dienste des Mobilfunknetzes 3a nutzen kann, so stellt das Endgerät 1 mittels der ersten Teilnehmeridentitätsdaten 4a des Teilnehmeridentitätsmoduls 2 eine Anfrage an das Netz 3a. Das Netz 3a überprüft, ob ein Teilnehmeridentitätsmodul 2 mit den ersten Teilnehmeridentitätsdaten 4a in dem Netz 3a Dienste nutzen darf und bestätigt die erfolgreiche Einbuchung. Würde der Teilnehmer das Teilnehmeridentitätsmodul 2 von den ersten Teilnehmeridentitätsdaten 4a auf die zweiten Teilnehmeridentitätsdaten 4b umschalten, würde das Netz 3a ebenfalls überprüfen, ob ein Teilnehmeridentitätsmodul 2 mit den zweiten Teilnehmeridentitätsdaten 4b in dem Netz 3a Dienste nutzen darf. Im Fall der Figur 1 würde das Netz 3a feststellen, dass das Teilnehmeridentitätsmodul 2 mit den zweiten Teilnehmeridentitätsdaten 4b keine Dienste des Netzes 3a nutzen darf und das Teilnehmeridentitätsmodul 2 in dieser Konfiguration abweisen. Anstelle würde ein Netz 3b, welches verschieden vom Netz 3a ist, das Teilnehmeridentitätsmodul 2 mit zweiten Teilnehmeridentitätsdaten 4b erfolgreich einbuchen, dahingegen das Teilnehmeridentitätsmodul 2 mit zweiten Teilnehmeridentitätsdaten 4a abweisen. Dadurch wird es einem Teilnehmer ermöglicht zwischen zwei verschiedenen Netzen 3a und 3b umzuschalten, um beispielsweise unterschiedliche Mobilfunkdienste mit einem Endgerät 1 nutzen zu können.

Teilnehmeridentitätsmodule 2 mit mehreren eindeutigen Teilnehmeridentitäten 4a, 4b ermöglichen es dem Nutzer eines Endgeräts 1, wie z.B. einem Mobilfunktelefon, einem Smart Phone, einem Tablet-PC oder einem Rechner, zwischen verschiedenen Teilnehmeridentitätsdaten 4a, 4b hin und her zu schalten, ohne das Teilnehmeridentitätsmodul 2 im Endgerät auszutauschen.

Um eine korrekte Funktionalität einer Multi- oder Dual-Teilnehmeridentitäten-Applikation sicherstellen zu können, sind in dem Teilnehmeridentitätsmodul 2 folgende Einstellungen erforderlich. Hierbei wird auf die in einem Chipkarten-Dateisystem verwendeten Datentypen EF (Elementary File) und DF (Dedicated File) sowie ADF (Application Dedicated File) Bezug genommen. In den nachfolgend verwendeten Indizes stehen IMSI für International Mobile Subscriber Identity, GSM für Global System for Mobile Communications, USIM für Universal Subscriber Identity Module, Kc für den Schlüssel Kc, LOCI für Location Information und FPLMN für Forbidden Public Land Mobile Network. Die entsprechenden Dateien, deren Inhalte sowie der Aufbau sind einem Fachmann hinlänglich bekannt, so dass in der nachfolgenden Beschreibung hierauf nicht näher eingegangen wird.

Für kombinierte unterschiedliche Teilnehmeridentitätsprofile 4 werden folgende Profileinstellungen in dem Teilnehmeridentitätsmodul 2 pro Teilnehmeridentitätsprofil 4 hinterlegt:
- EF_IMSI unter DF_GSM und EF_IMSI unter ADF_USIM werden miteinander verknüpft, d.h. sie teilen den gleichen Datenkörper (Body) und Datenteil.
- Die Dateien EF_LOCI (sowohl unter der DF_GSM und der ADF_USIM) haben das UPDATE Event-Byte gesetzt.
- Die Dateien EF_FPLMN (sowohl unter der DF_GSM und der ADF_USIM) haben das UPDATE Event-Byte gesetzt.

Darüber hinaus werden folgende weitere Erfordernisse berücksichtigt:
Das Umschalten zwischen den Teilnehmeridentitätsdaten 4a, 4b kann beispielsweise auch durch das Endgerät 1 initiiert werden. Dabei kann eine teilnehmerseitige Initiierung, beispielsweise mittels Graphical User Interface, kurz GUI, auf dem Endgerät 1 vorangegangen sein. Das Umschalten kann ebenso auch automatisiert von einem der Netzwerke initiiert werden.

Im Fall, dass der Teilnehmer des das Teilnehmeridentitätsmodul 2 umfassenden Endgeräts 1 eine nutzerseitige Umschaltung von ersten Teilnehmeridentitätsdaten 4a auf zweite Teilnehmeridentitätsdaten 4b vornimmt und nach dem Umschalten keine Netzeinbuchung in einem Netzwerk 3 möglich ist, wird eine Nachricht auf dem Endgerät 1 angezeigt, dass der Teilnehmer zurück auf die ersten Teilnehmeridentitätsdaten 4a schalten muss oder eine automatisierte Umschaltung ermöglicht werden muss. Hierzu führt die Applikation zwei unterschiedliche Arten einer Aktualisierung (REFRESH) durch. Falls die Einbuchung in ein Netzwerk 3a mit Teilnehmeridentitätsdaten 4a und die Einbuchung in ein Netzwerk 3b mit Teilnehmeridentitätsdaten 4b fehlschlagen wird der Teilnehmer des Endgeräts 1 über ein Display aufgefordert, das Endgerät 1 manuell ein- und wieder auszuschalten.

Im Falle, dass ein Fehler bei einer automatisierten Umschaltung von den ersten Teilnehmeridentitätsdaten 4a auf die zweite Teilnehmeridentitätsdaten 4b auftritt, besteht die Möglichkeit, eine nutzerseitige Umschaltung von den ersten Teilnehmeridentitätsdaten 4a auf die zweite Teilnehmeridentitätsdaten 4bvorzunehmen. Dies wird dem Nutzer über einen entsprechenden Menüeintrag im Endgerät 1 angeboten.

Das Verfahren ist vielseitig einsetzbar und flexibel auf eine Vielzahl von Teilnehmeridentitätsmodulen 2 in Endgeräten 1 und Alltagsszenarien anwendbar, wobei die folgende Aufzählung nicht allumfassend ist. Ein Teilnehmer kann nun auf einfache Weise zwischen zwei Teilnehmeridentitäten 4 umschalten, wobei er beispielsweise während der Arbeitszeit eine Teilnehmeridentität 4a der Firma verwendet und zum Abend hin auf seine private Teilnehmeridentität 4b umschaltet, wobei auch das Netzwerk, indem er Dienste Nutzen möchte, umschaltet.

Für eine Fahrt mit einem Kraftfahrzeug, verwendet der Teilnehmer gegebenenfalls ein speziell für Navigationsdienste geeignetes Netzwerk 3 um die Fahrtroute zu erhalten.

Zum Empfangen von Mediadaten, beispielsweise Audio, Video, Bilder-Daten, die der Teilnehmer über entsprechende Module weiter verarbeitet, nutzt der Teilnehmer einen Mediadatentarif eines Netzwerkes 3, wobei er dazu die Teilnehmeridentität 4 auf dieses Netzwerk 3 umschaltet.

In Figur 2 ist ein Blockschaltbild eines Teilnehmeridentitätsmoduls 2 dargestellt. Dabei weist das Teilnehmeridentitätsmodul 2 eine Datenschnittstelle 21 auf. Eine zentrale Recheneinheit 22 verbindet die Datenschnittstelle 21 mit einem Speicher 23, der flüchtig (RAM) oder nicht flüchtig (ROM, EEPROM, FLASH) ausgebildet sein kann. In einer ersten Variante sind im permanent nichtflüchtigen Speicherbereich ROM die Teilnehmeridentitätsdaten 4a, 4b abgelegt. Dadurch ist sichergestellt, dass die Teilnehmeridentitätsdaten 4a, 4b, beispielsweise eine IMSI, sicher abgelegt sind und nicht manipuliert werden können. Alternativ sind die Teilnehmeridentitätsdaten 4a, 4b in einem veränderbaren nichtflüchtigen Speicherbereich, beispielsweise EEPROM oder Flash, abgelegt. Dadurch können die Teilnehmeridentitätsdaten 4a, 4b für das jeweilige System angepasst werden. Insbesondere ist es möglich, dass die Teilnehmeridentitätsdaten 4 nach der Ausgabe des Teilnehmeridentitätsmoduls 2 an den Teilnehmer eingebracht werden können, wodurch ein flexiblerer Einsatz des Moduls 2 möglich ist.

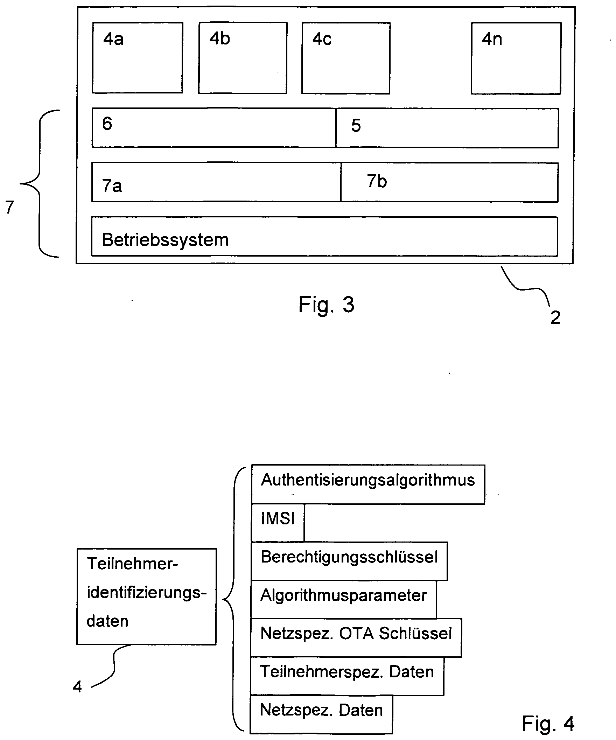

In Figur 3 ist eine beispielhafte Schichtendarstellung der Programm- und Datenhierarchie in einem erfindungsgemäßen Teilnehmeridentitätsmodul 2 dargestellt. Dabei ist im Speicherbereich 23 des Teilnehmeridentitätsmoduls 2 ein Betriebssystem mit einem damit verknüpften allgemeinen Dateisystem 7a abgelegt, wobei das Dateisystem 7a über das Betriebssystem administrierbar ist. Ein Speicherbereich mit teilnehmerspezifischen Daten 7b ist ebenfalls mittels des Betriebssystems administrierbar.

Gemäß Figur 3 handelt es sich um ein Teilnehmeridentitätsmodul 2, welches mit einer Mehrzahl von Teilnehmerprofilen 4 ausgestattet ist. Jedes Teilnehmeridentitätsprofil 4 gemäß Figur 3 beinhaltet Teilnehmeridentitätsdaten 4a, 4b, 4c, 4n, die einen Teilnehmer an jeweils unterschiedlichen Kommunikationsnetzen 3 eindeutig identifizieren und/oder authentisieren. Die Profile 4a bis 4n sind dabei einzeln hinzufügbar, aktivierbar, nutzbar, deaktivierbar und auch löschbar. Eine Administration der Profile 4 und der dafür notwendigen Daten, Authentisierungen und Verschlüsselung wird mittels eines Subskriptions-Management-Klienten durchgeführt. Eine entsprechende Sicherheitsebene 6 sichert diese Verwaltung der Profile 4 ab. Die jeweiligen Daten werden insbesondere über eine Luftschnittstelle, insbesondere Over-The-Air (OTA) aber auch über Internetverbindung (Over-The-Internet, kurz OTI) in das jeweilige Teilnehmeridentitätsmodul 2 geladen.

Mit derartigen Teilnehmeridentitätsmodulen 2 ist es nicht mehr zwingend notwendig, dass ein Betreiber eines Netzwerkes 3 für die Identifizierung und Authentisierung eines Teilnehmers an seinem Netzwerk auf Basis eines geschlossenen Vertrags, ein neues Teilnehmeridentitätsmodul 2 erzeugt und an den Teilnehmer in Form einer SIM Karte ausgibt. Stattdessen wird ein Profil 4 durch den Netzbetreiber auf Basis des geschlossenen Vertrages erstellt. Das Profil 4 wird dann in das bereits im Endgerät 1 eingebrachte Teilnehmeridentitätsmodul 2 hinzugefügt und kann parallel zu anderen Profilen 4 existieren. Dadurch ergibt sich, dass das Teilnehmeridentitätsmodul 2 nicht mehr mechanisch lösbar in einem Endgerät 1 eingebracht werden muss, stattdessen können fest verdrahtete Teilnehmeridentitätsmodule 2, kurz eUICCs, im Endgerät 1 eingebracht sein. Dies spart Platz im Endgerät, wodurch andere Funktionalitäten im Endgerät 1 realisiert werden können, ohne die Bauform des Endgeräts 1 vergrößern zu müssen. Das erfindungsgemäße Verfahren ist insbesondere auf eUICC anzuwenden, da hier ein Benutzer nicht das Teilnehmeridentitätsmodul 2 wechseln muss, um mittels eines alternativen Vertrags Dienste eines Netzwerks 3 nutzen zu können.

Gemäß Figur 4 sind beispielhafte Teilnehmeridentitätsdaten 4 aufgelistet. Diese Teilnehmeridentitätsdaten 4 gemäß Figur 4 umfassen insbesondere eine Angabe über den beim Betreiber des Netzwerkes 3 verwendet Authentisierungsalgorithmus, die International Mobile Subscriber Identity (IMSI), die zur Authentisierung verwendeten kryptografischen Berechtigungsschlüssel, die Parametereinstellungen des verwendeten Algorithmus, ggf. netzbetreiberspezifische OTA-Schlüssel, um eine sichere OTA-Kommunikation zu ermöglichen, teilnehmerspezifische Daten, wie Name, Vorname, ID-Nummer, Geburtsdatum, Geburtsort etc; und ggf. zusätzliche netzbetreiberspezifische Daten, beispielsweise welche Dienste im jeweiligen Netz 3 für den Teilnehmer freigeschaltet sind. Diese Auflistung ist keinesfalls allumfassend und kann in alternativen Beispielen auch weniger, mehr oder andere Daten umfassen.

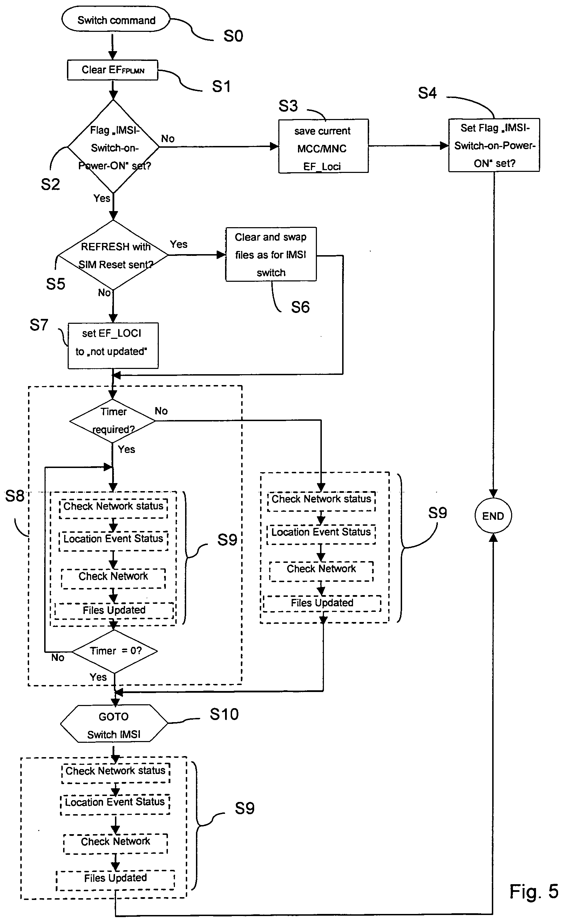

Nachfolgend wird der Ablauf zum Umschalten eines zumindest eines erste und eine zweite Teilnehmeridentitätsdaten 4 aufweisenden Teilnehmeridentitätsmoduls anhand der Figuren 5 bis 10 beschrieben. Dabei werden Ablaufdiagramme von Verfahren näher erläutert.

Die Mehrzahl neuerer Endgeräte 1 führt eine Erfassung der Teilnehmeridentitätsdaten 4 anhand der IMSI durch. Dies bedeutet, das Endgerät 1 nimmt eine automatische Konfiguration der Netzwerkeinstellungen entsprechend dem in der IMSI enthaltenen Ländercode und Netzwerkcode, welche von dem Teilnehmeridentitätsmodul 2 gelesen werden, vor. Mit dem nachfolgend näher beschriebenen Verfahren kann eine falsche Konfiguration der Teilnehmeridentitätsdaten 4 im Hinblick auf eine Umschaltung verbessert werden.

Sollte während der Umschaltung der Teilnehmeridentitätsdaten 4 das Teilnehmeridentitätsmodul 2 neugestartet werden, wird unter Nutzung eines Timers eine vordefinierte Zeit gewartet, um sicherzustellen, dass das Endgerät 1 die Reboot-Sequenz abgeschlossen hat.

Während die Zeitschleife abläuft, versucht das Teilnehmeridentitätsmodul 2 bereits, das Endgerät 1 mit einem Netzwerk 3 zu verbinden. Dies hängt davon ab, wie schnell das Endgerät 1 seine Reboot-Sequenz beendet und bereit für eine Netzwerkverbindung ist. Abhängig von einer zufälligen Zeitschleife, den Eigenschaften des Endgeräts 1 und dem Zustand des Netzwerks 3 kann dies zu folgenden Situationen führen:
Das Endgerät 1 ist bereits mit dem Netzwerk 3 verbunden, wenn die Zeitschleife abläuft: Wenn das Teilnehmeridentitätsmodul 2 bereits auf die zweiten Teilnehmeridentitätsdaten 4b umgeschaltet ist, allerdings das Endgerät 1 noch mit in den ersten Teilnehmeridentitätsdaten 1a beim Netzwerk 3a, beispielsweise aus einem Speicherbereich des Endgeräts 1 unabhängig vom Speicherbereich des Teilnehmeridentitätsmoduls 2, dann würde dies zu einem Verlust an Konnektivität mit dem Netzwerk 3a und der Nutzer des Endgeräts 1 muss bis zum Ablauf einer Zeitschleife warten, um auf die zweiten Teilnehmeridentitätsdaten 4b umschalten zu können.

Das Endgerät ist noch nicht mit einem Netzwerk verbunden, wenn der Timer abgelaufen ist: Wenn die Teilnehmeridentitätsdaten 4 umgeschaltet worden sind, führt die Anwendung der neuen Konfiguration zu einem falschen Zustand. Dies bedeutet, bis zur Verbindung mit dem Netzwerk 3 benötigt es länger, da ein Timeout abgewartet werden muss, um auf die richtige Teilnehmeridentität 4b umschalten zu können.

Bezug nehmend auf den in Fig. 5 gezeigten Ablauf wird das Verfahren zum Betreiben des Teilnehmeridentitätsmoduls 2 beschrieben. Zunächst empfängt das Teilnehmeridentitätsmodul 2 im Schritt S0 das Umschaltkommando ("switch command") vom Netzwerk 3 über das Endgerät 1. Alternativ wird das Umschaltkommando ("switch command") im Teilnehmeridentitätsmodul 2 automatisch ausgelöst, sobald spezifische Netzwerkparameter des Netzwerkes 3 vom Teilnehmeridentitätsmodul 2 erkannt wurden. In einem Schritt S1 wird die Datei EF_FPLMN gelöscht ("Clear"), wodurch sichergestellt wird, dass das Überwachen dieser spezifischen Datei von einem definierten Zustand der Datei gestartet wird. Der Schritt S1 wird bereits unmittelbar zu Beginn des Verfahrens durchgeführt und nicht während des eigentlichen Umschaltens von den ersten Teilnehmeridentitätsdaten 4a auf die zweiten Teilnehmeridentitätsdaten, da manche Endgeräte 1 die spezifischen Dateien aktualisieren, bevor ein Reset des Teilnehmeridentitätsmoduls 2 durchgeführt wird. Durch Schritt S1 kann sichergestellt werden, dass gültige Einträge für die Überprüfung von Netzwerkparametern, insbesondere des Ländercodes MCC und der Mobilfunkcodes MNC, zu einem späteren Zeitpunkt gegeben sind.

In Schritt S2 wird überprüft, ob ein Flag "IMSI switch on POWER ON" gesetzt ist, um festzustellen, ob ein Umschalten S10 von der ersten Teilnehmeridentitätsdaten 4a auf die zweiten Teilnehmeridentitätsdaten 4b zu einem früheren Zeitpunkt initiiert wurde und im Laufe dieses früheren Initiierens ein Neustart des Teilnehmeridentitätsmoduls 2 erforderlich war. Ist das Flag gesetzt ("Yes"), wird mit Schritt S5 fortgefahren. Ist dies nicht der Fall ("No"), wird in Schritt S3 der Ländercode MCC und der Netzwerkcode MNC der aktuell aktivierten Teilnehmeridentitätsdaten 4 sowie die aktuelle spezifische Datei EF_Loci gespeichert ("Save current MCC, MNC, EF_Loci"). In Schritt S4 wird das Flag "IMSI switch on POWER ON" gesetzt (Set Flag "IMSI switch on POWER ON").

In Schritt S5 wird überprüft, ob ein REFRESH Befehl vom Endgerät 1 an das Teilnehmeridentitätsmodul 2 zum Zwecke eines Resets gesendet wurde. ("Refresh with SIM Reset sent?"). Ist dies der Fall ("Yes"), so werden in Schritt S6 die spezifischen Dateien gelöscht und ausgelagert für die Umschaltung der Teilnehmeridentitätsdaten 4 ("Clear and Swap files as for IMSI switch"). Anschließend wird mit Schritt S8 fortgefahren. Übergibt die Überprüfung in Schritt S5, dass kein REFRESH Befehl gesendet wurde ("No"), so wird die spezifische Datei EF_LOCI als nicht aktualisiert markiert ("Set EF_LOCI to not updated"). Im Weiteren wird ebenfalls mit Schritt S8 fortgefahren. Die Schritte S0 bis S7 sind eine Initialisierungsphase des erfindungsgemäßen Verfahrens und dienen prinzipiell dazu, stets definierte Ausgangszustände vor der erfindungsgemäßen Überwachung zu erhalten.

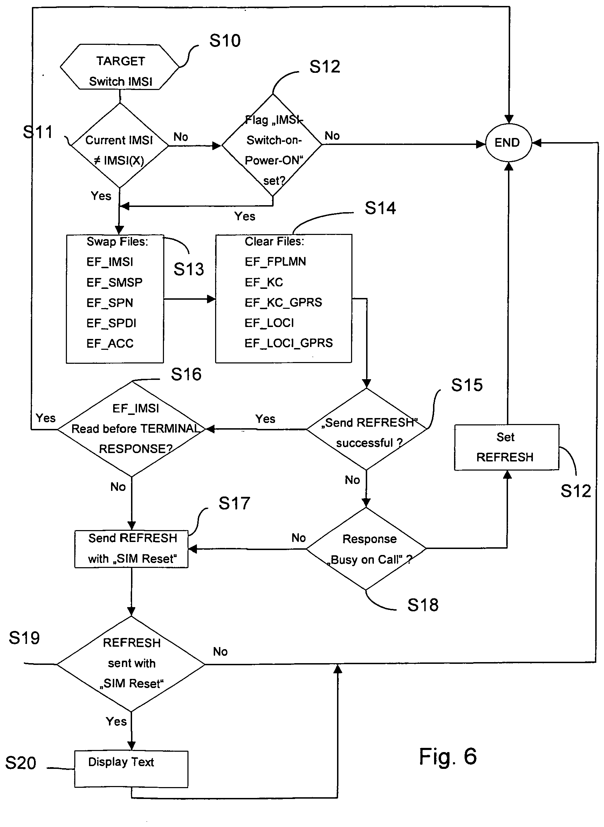

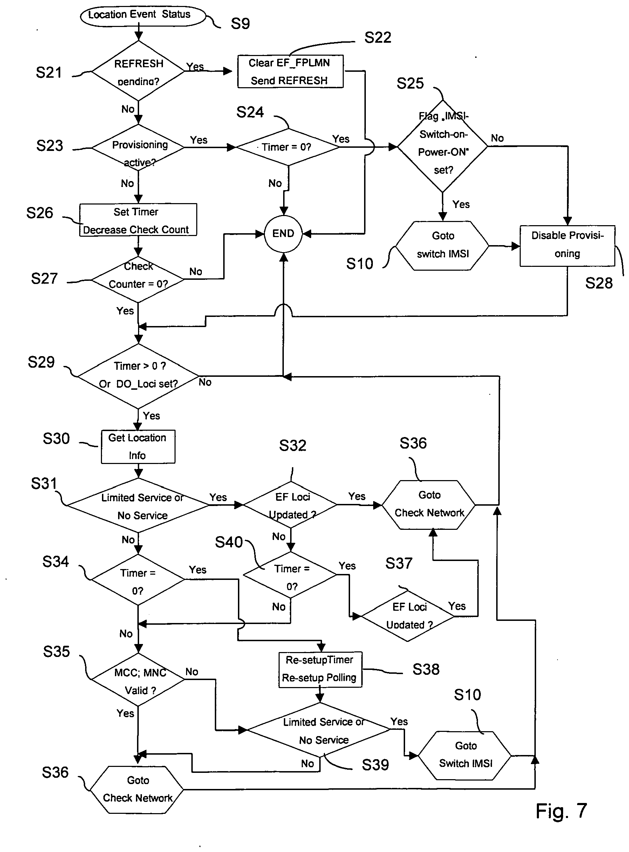

In Schritten S8 und S9 erfolgt nun die erfindungsgemäße Überwachung der spezifischen Dateien, der Überwachung des Netzwerkstatus, die Überwachung der vom Netzwerk angebotenen Dienste sowie der Überwachung der Netzwerkparameter. Die tatsächliche Überwachung im Schritt 9 erfolgt gemäß dem Aufruf von Unterroutinen, die die entsprechenden Überwachungen vornehmen. Sie werden in den Figuren 7 bis 10 beschrieben. In Figur 5 ist der Schritt 9 mehrfach in gestrichelter Linie dargestellt, da die Überwachung gemäß Unterprogrammroutinen zu einem beliebigen und/oder fest definierten Zeitpunkt vor oder nach dem Umschalten der Teilnehmeridentitätsdaten 4 gemäß Schritt S10 ("Switch IMSI") erfolgt. Der Schritt S10 hat zur Folge, dass das Teilnehmeridentitätsmodul 2 neu gestartet wird, siehe auch Figur 6. Die Überwachung kann insbesondere mehrfach erfolgen und gemäß Schritt 8 mittels Zeitschleifen zeitlich verzögert werden, um die Kommunikation zwischen Endgerät 1 und Modul 2 abzusichern und definierte Zustände zu erhalten.

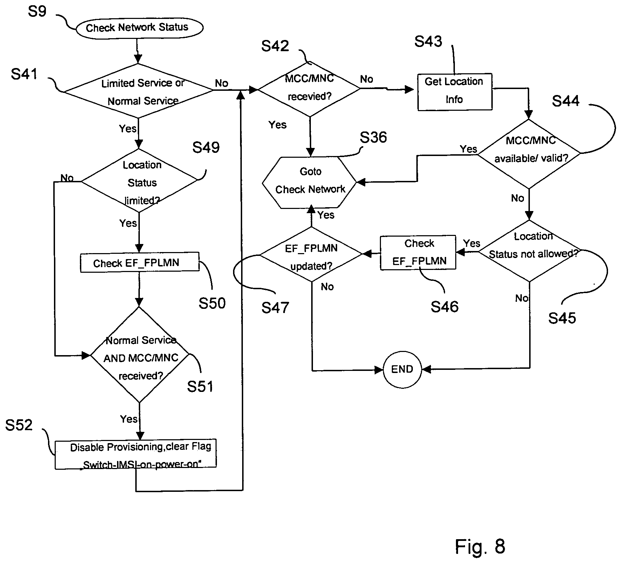

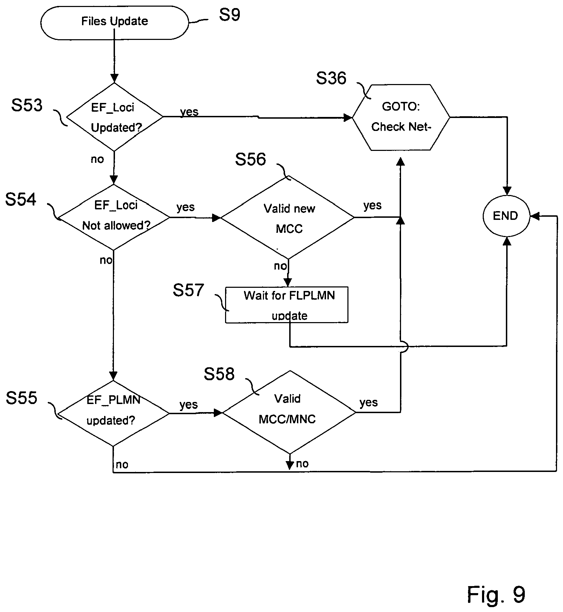

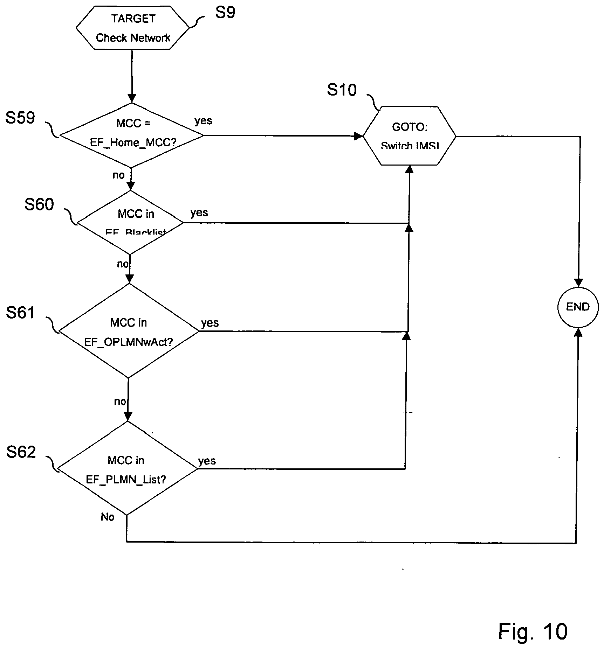

Gemäß Schritt 8 wird überprüft, ob eine Zeitschleife eingerichtet werden soll ("Timer required?"). Diese Zeitschleife wird gestartet, wenn die Überprüfung ergibt, dass eine Zeitschleife notwendig ist ("Yes"). Diese Zeitschleife wird abgewartet ("Timer =0?") bevor gemäß Schritt S10 die eigentliche Umschaltung ("Switch IMSI") erfolgt. Während dieser Zeit erfolgt eine Überprüfung gemäß Schritt 9. Wird entschieden, dass die Zeitschleife nicht benötigt wird ("No") so erfolgt die Überprüfung gemäß Schritt 9 ohne Ablauf einer vordefinierten Zeitspanne.
In Abhängigkeit der Überprüfung werden gemäß Schritt 9 der Netzwerkstatus überprüft ("Check Network Status"), siehe insbesondere Figur 8, die Überwachung der vom Netzwerk angebotenen Dienste ("Location Event Status"), siehe insbesondere Figur 7, die Überprüfung des Netzwerks ("Check Network"), siehe insbesondere Figur 10, und/oder die Überwachung der Aktualisierung von spezifischen Dateien ("Files updated"), siehe insbesondere Figur 9.

Die eigentliche Umschaltung der Teilnehmeridentitätsdaten 4 erfolgt gemäß Schritt S10, näher erläutert im Ablaufdiagramm der Figur 6. Im Schritt S11 wird geprüft, welche Teilnehmeridentitätsdaten 4 momentan aktiviert sind und ob diese umgeschaltet werden sollen ("Current IMSI ≠ (X)?"). Falls die Überprüfung ergibt, dass die Teilnehmeridentitätsdaten 4 nicht umgeschaltet werden müssen ("No") wird in S12 das Flag "IMSI Switch on Power ON" abgefragt, wobei ein nicht gesetztes Flag gemäß Schritt S12 ein Ende des Verfahrens bedeutet ("End"), da dann das Umschaltkommando ("Switch command") gemäß S0 fälschlicherweise empfangen wurde. Ergibt S12 oder S11, dass eine Umschaltung erfolgen soll, werden in Schritt 13 spezifische Dateien ausgelagert und gemäß Schritt 14 Dateien bezüglich Netzwerkparameter gelöscht. Anschließend wird das Teilnehmeridentitätsmodul 2 neu gestartet, was durch den Befehl REFRESH" gemäß Schritt S12, S17 oder S19 entsprechend der Aktivitäten des Teilnehmeridentitätsmodul 2 unterschiedlich ausgestaltet wird.

In Figur 7 ist ein Ablaufdiagramm zur Überwachung der vom Netzwerk angebotenen Dienste dargestellt. Im Folgenden wird nur auf die wesentlichen Teile des Ablaufdiagramms eingegangen. Insbesondere gemäß Schritt 30 wird vom Teilnehmeridentitätsmodul 2 eine Abfrage bezüglich der Standortinformation initiiert, die vom Endgerät 1 ausgeführt wird ("Get Location Info"). Im Schritt 31 und Schritt 39 wird überprüft, ob eine Einbuchung ins Netzwerk erfolgte ("No Service?") oder ob eingeschränkte Dienste im eingebuchten Netzwerk ("Limited Service") vorhanden sind. Weiterhin wird die EF_Loci als spezifische Datei auf Aktualisierung geprüft, siehe S37, S32. Weiterhin wird in S35 geprüft, ob der Landcode und/oder Netzwerkcode des eingebuchten Netzes mit den umgeschalteten Teilnehmeridentitätsdaten 4 übereinstimmen.

In Figur 8 wird der aktuelle Netzwerkstatus überprüft. Im Folgenden wird nur auf die wesentlichen Teile des Ablaufdiagramms eingegangen. Im Schritt 41 wird überprüft, ob eine Einbuchung ins Netzwerk erfolgte ("No service?") oder ob eingeschränkte Dienste im eingebuchten Netzwerk ("Limited Service") vorhanden sind. Im Schritt S50, S47, S42, S44, S45 werden die EF_PLMN , MCC, MNC auf Gültigkeit bzw. auf Aktualisierung geprüft.

In Figur 9 wird überprüft, inwieweit spezifische Dateien aktualisiert worden sind. Im Folgenden wird nur auf die wesentlichen Teile des Ablaufdiagramms eingegangen. Im Schritt S53 wird überprüft, ob die Datei EF_Loci aktualisiert worden ist. Die EF_LOCI wird vom Endgerät 1 verwendet, um die zuletzt registrierte Standortinformation zu speichern. Diese Datei enthält sowohl eine Netzwerkidentität als auch die Position im Netzwerk 3, in dem das Telefon zuletzt registriert wurde. Bei einem Einbuchungsversuch werden die Informationen der EF Loci vom Endgerät 1 aktualisiert. Diese Aktualisierung signalisiert dem Teilnehmeridentitätsmodul 2 indirekt, dass ein neues Mobilnetzwerk erkannt wurde. Im Schritt S55 und S57 wird die Aktualisierung der EF_FPLMN überwacht. Die EF_FPLMN gibt Netzwerke 3 an, in die sich der Teilnehmer nicht einbuchen darf. Wurde diese Datei aktualisiert, so steht fest, dass die umgeschaltete Teilnehmeridentitätsdaten 4 vom Endgerät 1 richtig erkannt wurden, bzw. das Endgerät mit den neuen Daten 4 eine Einbuchung versucht. Beide Dateien EF_LOCI und EF_FPLMN zeigen dem Teilnehmeridentitätsmodul 2, inwieweit die Einbuchung in ein anders Netz 3b endgeräteseitig bereits versucht wurde und was die Antwort des Netzes daraufhin war.

In Figur 10 werden Netzwerkparameter überprüft, welche angeben welches Netzwerk 3 momentan verfügbar ist und/oder in welches Netzwerk 3 eine Einbuchung durch das Endgerät 1 versucht wird. Speziell der Netzwerkcode MNC und der Ländercode MCC werden hierbei überwacht.

### Bezugszeichenliste

- 1: Endgerät
- 2: Teilnehmeridentitätsmodul, SIM
21 Datenschnittstelle
22 Zentrale Recheneinheit
23 flüchtige- und nichtflüchtige Speicherbereiche
- 3: Kommunikationsnetzwerk, Mobilfunknetz
3a Erstes Kommunikationsnetz
3b Zweites Kommunikationsnetz
- 4: Teilnehmeridentitätsdaten, Teilnehmeridentitätsprofile 4a,b,c,n Teilnehmeridentitätsdaten pro Kommunikationsnetz
- 5: SIM Applikation(en)
- 6: Sicherheitsebene
- 7: SIM Datei und Applikationshierarchie
7a Dateien des allgemeinen Dateisystems
7b Dateien des teilnehmerspezifischen Dateisystems
- S0 bis S62: Verfahrensschritt

## Patentansprüche

1. Verfahren zum Betreiben eines Teilnehmeridentitätsmoduls (2), wobei das Teilnehmeridentitätsmodul (2) zumindest erste Teilnehmeridentitätsdaten (4a) und zweite Teilnehmeridentitätsdaten (4b) aufweist, mit den Verfahrensschritten:
- Empfangen eines Umschaltkommandos (S0) im Teilnehmeridentitätsmodul (2) von einem, dem Teilnehmeridentitätsmodul (2) zugeordneten Endgerät (1) zum Umschalten (S10) von den ersten Teilnehmeridentitätsdaten (4a) auf die zweiten Teilnehmeridentitätsdaten (4b);
- Überwachen (S9) des Teilnehmeridentitätsmoduls (2) auf Aktualisierung (S32, S37, S46, S47, S50, S53, S55, S57) zumindest einer spezifischen Datei im Teilnehmeridentitätsmodul (2), wobei die Aktualisierung (S32, S37, S46, S47, S50, S53, S55, S57) durch ein dem Teilnehmeridentitätsmodul (2) zugeordnetes Endgerät (1) nach dem Empfangen des Umschaltkommandos (S0) erfolgt;
- Umschalten (S10) von den ersten Teilnehmeridentitätsdaten (4a) auf die zweiten Teilnehmeridentitätsdaten (4b) sobald die Aktualisierung(S32, S37, S46, S47, S50, S53, S55, S57) der spezifischen Datei erkannt wurde.

2. Verfahren nach Anspruch 1 wobei das Umschaltkommando (S0) benutzerseitig, netzwerkseitig und/oder automatisiert initiiert wird.

3. Verfahren nach einem der vorhergehenden Ansprüche, wobei anstelle oder zusätzlich zum Überwachen (S9) der mindestens einen spezifischen Datei zumindest einmal die verfügbaren Netzwerkdienste des Kommunikationsnetzwerks (3) abgefragt (S31, S39, S41, S51) werden, wobei diese Abfrage (S31, S39, S41, S51) durch das Teilnehmeridentitätsmodul (2) initiiert wird und die Verarbeitung der Abfrage (S31, S39, S41, S51) durch das dem Teilnehmeridentitätsmodul (2) zugeordnete Endgerät (1) erfolgt.

4. Verfahren nach einem der vorhergehenden Ansprüche, wobei anstelle oder zusätzlich zum Überwachung (S9) der mindestens einen spezifischen Datei zumindest ein spezifischer Netzwerkparameter durch die Verarbeitung von teilnehmeridentitätsmodulseitig initiierten Netzstatusabfragen (S36) überwacht (S35, S42, S51, S44, S58, S59, S60, S61, S62) werden, wobei die Verarbeitung durch das dem Teilnehmeridentitätsmodul (2) zugeordnete Endgerät (1) erfolgt und das Umschalten (S10) auf die zweiten Teilnehmeridentitätsdaten (4b) erfolgt, sobald der spezifische Netzwerkparameter erkannt wurde.

5. Verfahren nach einem der vorhergehenden Ansprüche, bei dem die zumindest eine Datei eine Nutzdatendateien im Dateisystem (7) des Speicherbereichs (23) des Teilnehmeridentitätsmoduls (2) ist.

6. Verfahren nach Anspruch 5, wobei als Nutzdatei die EF_Loci und/oder die EF_FPLMN auf Aktualisierung (S32, S37, S46, S47, S50, S53, S55, S57) überwacht (S9) werden.

7. Verfahren nach einem der vorhergehenden Ansprüche, bei dem als Netzparameter der Landescode (MCC) und/oder der Netzwerkcode (MNC) überwacht (S35, S42, S51, S44, S58, S59, S60, S61, S62) werden.

8. Verfahren nach einem der vorhergehenden Ansprüche, bei dem überwacht (S9) wird, ob die zumindest eine spezifische Datei und/oder der Netzwerkparameter überschrieben (S32, S37, S47, S53, S55) wurden, wobei ein Überschreiben die Verfügbarkeit eines neuen Kommunikationsnetzwerks (3) signalisiert (S35, S44, S54, S56, S58, S59, S60, S61, S62).

9. Verfahren nach einem der vorhergehenden Ansprüche, bei dem das Überwachen (S9) mit Beenden (S24, S29, S34, S40) einer konfigurierbaren (S26) Wartezeit (S8) endet.

10. Verfahren nach Anspruch 9, bei dem die Abfrage (S31, S39, S41, S51) von verfügbaren Netzwerkdiensten des Kommunikationsnetzwerks (3) in vorgegebenen Zeitintervallen erfolgt, wobei die Abfrage (S31, S39, S41, S51) durch das Teilnehmeridentitätsmodul (2) initiiert wird.

11. Verfahren nach einem der vorhergehenden Ansprüche, wobei auf die ersten Teilnehmeridentitätsdaten (4a) im Teilnehmeridentitätsmodul (2) umgeschaltet wird falls das Kommunikationsnetzwerk (3) einen Zugang für das Teilnehmeridentitätsmodul (2) nur mit eingeschränkten und/oder mit keinen Netzwerkdiensten ermöglicht.

12. Verfahren nach einem der vorhergehenden Ansprüche, wobei auf die ersten Teilnehmeridentitätsdaten (4a) im Teilnehmeridentitätsmodul (2) umgeschaltet (S10) wird falls die Verfügbarkeit von Netzwerkdiensten des Kommunikationsnetzwerks auf Basis der zweiten Teilnehmeridentitätsdaten (4b) nach Ablauf eines Zeitkriteriums (S8) erfolglos und/oder eingeschränkt bleibt.

13. Computerprogrammprodukt, das maschinenlesbare Programmbefehle für eine Steuerungseinheit einer Daten verarbeitenden Vorrichtung aufweist, die diese zur Ausführung eines Verfahrens nach einem der vorhergehenden Ansprüche veranlassen.

14. Teilnehmeridentitätsmodul (2), eingerichtet zum Ausführen eines Verfahrens nach einem der vorhergehenden Ansprüche 1 bis 12, wobei das Teilnehmeridentitätsmodul (2) zumindest erste Teilnehmeridentitätsdaten (4a) und zweite Teilnehmeridentitätsdaten (4b) aufweist und das Umschaltkommando (S0) benutzerseitig, netzwerkseitig und/oder automatisiert initiiert wird.

15. Teilnehmeridentitätsmodul (2) nach Anspruch 14, wobei die ersten Teilnehmeridentitätsdaten (4a) eingerichtet sind, einen Teilnehmer zur Nutzung von Netzwerkdiensten an einem ersten Kommunikationsnetzwerk (3a) zu authentisieren und die zweiten Teilnehmeridentitätsdaten (4b) eingerichtet sind, den Teilnehmer zur Nutzung von Netzwerkdiensten an einem zweiten Kommunikationsnetzwerk (3b) zu authentisieren.

## Claims

1. A method for operating a subscriber identity module (2), wherein the subscriber identity module (2) has at least first subscriber identity data (4a) and second subscriber identity data (4b), with the method steps of:
receiving a switch-over command (S0) in the subscriber identity module (2) from a terminal (1) allocated to the subscriber identity module (2) for switching (S10) from the first subscriber identity data (4a) to the second subscriber identity data (4b);
monitoring (S9) of the subscriber identity module (2) for an update (S32, S37, S46, S47, S50, S53, S55, S57) of at least one specific file in the subscriber identity module (2),
wherein the update (S32, S37, S46, S47, S50, S53, S55, S57) is effected by a terminal (1) allocated to the subscriber identity module (2) after receiving the switch-over command (SO);
switching (S10) from the first subscriber identity data (4a) to the second subscriber identity data (4b) as soon as the update (S32, S37, S46, S47, S50, S53, S55, S57) of the specific file has been detected.

2. The method according to claim 1, wherein the switch-over command (S0) is initiated on the side of the user, the network and/or in automated manner.

3. The method according to any of the preceding claims, wherein instead of or in addition to monitoring (S9) the at least one specific file, the available network services of the communication network (3) are queried (S31, S39, S41, S51) at least once, wherein said query (S31, S39, S41, S51) is initiated by the subscriber identity module (2) and the processing of the query (S31, S39, S41, S51) is effected by the terminal (1) allocated to the subscriber identity module (2).

4. The method according to any of the preceding claims, wherein instead of or in addition to monitoring (S9) the at least one specific file, at least one specific network parameter is monitored (S35, S42, S51, S44, S58, S59, S60, S61, S62) by the processing of network status queries (S36) initiated on the side of the subscriber identity module, wherein the processing is effected by the terminal (1) allocated to the subscriber identity module (2) and the switching (S10) to the second subscriber identity data (4b) is effected as soon as the specific network parameter has been detected.

5. The method according to any of the preceding claims, wherein the at least one file is a payload data file in the file system (7) of the memory area (23) of the subscriber identity module (2).

6. The method according to claim 5, wherein as the payload file the EF_Loci and/or the EF_FPLMN are monitored (S9) for an update (S32, S37, S46, S47, S50, S53, S55, S57).

7. The method according to any of the preceding claims, wherein as the network parameter the country code (MCC) and/or the network code (MNC) are monitored (S35, S42, S51, S44, S58, S59, S60, S61, S62).

8. The method according to any of the preceding claims, wherein it is monitored (S9) whether the at least one specific file and/or the network parameter have been overwritten (S32, S37, S47, S53, S55), wherein an overwriting signals (S35, S44, S54, S56, S58, S59, S60, S61, S62) the availability of a new communication network (3).

9. The method according to any of the preceding claims, wherein the monitoring (S9) ends with ending (S24, S29, S34, S40) a configurable (S26) waiting time (S8).

10. The method according to claim 9, wherein the query (S31, S39, S41, S51) of available network services of the communication network (3) is effected at predetermined time intervals, wherein the query (S31, S39, S41, S51) is initiated by the subscriber identity module (2).

11. The method according to any of the preceding claims, wherein a switch-over to the first subscriber identity data (4a) takes place in the subscriber identity module (2) if the communication network (3) permits access for the subscriber identity module (2) only with restricted and/or with no network services.

12. The method according to any of the preceding claims, wherein the switch-over (S10) to the first subscriber identity data (4a) takes place in the subscriber identity module (2) if the availability of network services of the communication network on the basis of the second subscriber identity data (4b) remains unsuccessful and/or restricted after the expiry of a time criterion (S8).

13. A computer program product having machine-readable program commands for a control unit of a data processing apparatus, said commands causing the apparatus to execute a method according to any of the preceding claims.

14. A subscriber identity module (2) adapted for executing a method according to any of the preceding claims 1 to 12, wherein the subscriber identity module (2) has at least first subscriber identity data (4a) and second subscriber identity data (4b) and the switch-over command (S0) is initiated on the side of the user, the network and/or in automated manner.

15. The subscriber identity module (2) according to claim 14, wherein the first subscriber identity data (4a) are adapted to authenticate a subscriber vis-à-vis a first communication network (3a) for the use of network services, and the second subscriber identity data (4b) are adapted to authenticate the subscriber vis-à-vis a second communication network (3b) for the use of network services.

## Revendications

1. Procédé de fonctionnement d'un module d'identité d'abonné (2), le module d'identité d'abonné (2) comportant au moins des premières données d'identité d'abonné (4a) et des deuxièmes données d'identité d'abonné (4b), comportant les étapes :
- réception d'une instruction de commutation (S0) dans le module d'identité d'abonné (2), de la part d'un terminal (1) affecté au module d'identité d'abonné (2), pour la commutation (S10) des premières données d'identité d'abonné (4a) aux deuxièmes données d'identité d'abonné (4b) ;
- surveillance (S9) du module d'identité d'abonné (2) portant sur l'actualisation (S32, S37, S46, S47, S50, S53, S55, S57) d'au moins un fichier spécifique dans le module d'identité d'abonné (2), l'actualisation (S32, S37, S46, S47, S50, S53, S55, S57) ayant lieu par un terminal (1) affecté au module d'identité d'abonné (2), après la réception de l'instruction de commutation (S0) ;
- commutation (S10) des premières données d'identité d'abonné (4a) aux deuxièmes données d'identité d'abonné (4b) dès que l'actualisation (S32, S37, S46, S47, S50, S53, S55, S57) du fichier spécifique a été reconnue.

2. Procédé selon la revendication 1, cependant que l'instruction de commutation (S0) est lancée côté utilisateur, côté réseau et/ou de façon automatisée.

3. Procédé selon une des revendications précédentes, cependant que, au lieu de ou en plus de la surveillance (S9) du au moins un fichier spécifique, au moins une fois les services de réseau disponibles du réseau de communication (3) sont consultés (S31, S39, S41, S51), cette consultation (S31, S39, S41, S51) étant lancée par le module d'identité d'abonné (2), et le traitement de la consultation (S31, S39, S41, S51) ayant lieu par le terminal (1) affecté au module d'identité d'abonné (2).

4. Procédé selon une des revendications précédentes, cependant que, au lieu de ou en plus de la surveillance (S9) du au moins un fichier spécifique, au moins un paramètre spécifique de réseau sont surveillés (S35, S42, S51, S44, S58, S59, S60, S61, S62) par le traitement de consultations de l'état du réseau (S36) lancées côté module d'identité d'abonné, le traitement ayant lieu par le terminal (1) affecté au module d'identité d'abonné (2), et la commutation (S10) sur les deuxièmes données d'identité d'abonné (4b) ayant lieu dès que le paramètre spécifique de réseau a été reconnu.

5. Procédé selon une des revendications précédentes, dans lequel le au moins un fichier est un fichier de données utiles dans le système de fichiers (7) de la zone mémoire (23) du module d'identité d'abonné (2).

6. Procédé selon la revendication 5, cependant que, en tant que fichier utile, le EF_Loci et/ou le EF_FPLMN sont surveillés (S9) quant à l'actualisation (S32, S37, S46, S47, S50, S53, S55, S57).

7. Procédé selon une des revendications précédentes, dans lequel, en tant que paramètre spécifique de réseau, le code pays (MCC) et/ou le code réseau (MNC) sont surveillés (S35, S42, S51, S44, S58, S59, S60, S61, S62).

8. Procédé selon une des revendications précédentes, dans lequel il est surveillé (S9) si le au moins un fichier spécifique et/ou le paramètre de réseau ont été écrasés (S32, S37, S47, S53, S55), un écrasement signalisant (S35, S44, S54, S56, S58, S59, S60, S61, S62) la disponibilité d'un nouveau réseau de communication (3).

9. Procédé selon une des revendications précédentes, dans lequel la surveillance (S9) prend fin au terme (S24, S29, S34, S40) d'un temps d'attente (S8) configurable (S26).

10. Procédé selon la revendication 9, dans lequel la consultation (S31, S39, S41, S51) de services de réseau disponibles du réseau de communication (3) a lieu à des intervalles de temps prédéterminés, la consultation (S31, S39, S41, S51) étant lancée par le module d'identité d'abonné (2).

11. Procédé selon une des revendications précédentes, cependant qu'il est commuté sur les premières données d'identité d'abonné (4a) dans le module d'identité d'abonné (2) si le réseau de communication (3) ne permet un accès pour le module d'identité d'abonné (2) qu'avec des services de réseau restreints et/ou avec aucun d'eux.

12. Procédé selon une des revendications précédentes, cependant qu'il est commuté (S10) sur les premières données d'identité d'abonné (4a) dans le module d'identité d'abonné (2) si la disponibilité de services de réseau du réseau de communication sur la base des deuxièmes données d'identité d'abonné (4b) reste sans succès et/ou restreinte après écoulement d'un critère de temps (S8).

13. Produit programme d'ordinateur qui comporte des instructions de programme lisibles par machine qui sont destinées à une unité de commande d'un dispositif traitant des données et qui amènent cette dernière à exécuter un procédé selon une des revendications précédentes.

14. Module d'identité d'abonné (2) conçu pour l'exécution d'un procédé selon une des revendications précédentes de 1 à 12, le module d'identité d'abonné (2) comportant au moins des premières données d'identité d'abonné (4a) et des deuxièmes données d'identité d'abonné (4b), et l'instruction de commutation (S0) étant lancée côté utilisateur, côté réseau et/ou de façon automatisée.

15. Module d'identité d'abonné (2) selon la revendication 14, cependant que les premières données d'identité d'abonné (4a) sont conçues pour authentifier un abonné pour l'utilisation de services de réseau dans un premier réseau de communication (3a), et que les deuxièmes données d'identité d'abonné (4b) sont conçues pour authentifier l'abonné pour l'utilisation de services de réseau dans un deuxième réseau de communication (3b).
